# EUROPÄISCHE PATENTSCHRIFT

(11) **EP 3 349 560 B1**
(45) Veröffentlichungstag und Bekanntmachung des Hinweises auf die Patenterteilung: **02.06.2021**
(21) Anmeldenummer: 16774877.1
(22) Anmeldetag: 13.09.2016
(51) Int. Cl.: A01C 5/06, A01C 7/06, A01B 49/06, A01C 7/20

(54) **STREIFENFRÄSE MIT WENIGSTENS ZWEI VONEINANDER BEABSTANDETEN FRÄSEN ZUR ERZEUGUNG VON FRÄSKANÄLEN**
STRIP ROTARY TILLER HAVING AT LEAST TWO SPACED-APART ROTARY TILLERS FOR PRODUCING TILLED CHANNELS
FRAISE À BANDES COMPRENANT AU MOINS DEUX FRAISES ESPACÉES L'UNE DE L'AUTRE DESTINÉES À PRODUIRE DES CANAUX FRAISÉS

(30) Priorität: 15.09.2015 DE 102015115543; 15.09.2015 DE 102015115554; 15.09.2015 DE 102015115553; 12.02.2016 DE 202016100748 U
(43) Veröffentlichungstag der Anmeldung: 25.07.2018
(73) Patentinhaber: Sima Investment AG, 6048 Horw (CH)
(72) Erfinder: SIEBER, Marco, 6048 Horw (CH); RÖLLI, Kilian, 6166 Hasle (CH)
(74) Vertreter: Patentanwaltskanzlei Vièl & Wieske PartGmbB
(86) Internationale Anmeldenummer: PCT/EP2016/071490
(87) Internationale Veröffentlichungsnummer: WO 2017/046046

(56) Entgegenhaltungen:
- EP-A1- 0 861 579
- WO-A1-2013/033764
- US-A- 4 278 036

## Beschreibung

Die vorliegende Erfindung betrifft eine Streifenfräse mit wenigstens zwei voneinander beabstandeten Fräsen zur Erzeugung von Fräskanälen, die sich mit nichtbearbeiteten Zwischenstreifen abwechseln, wobei die wenigstens zwei voneinander beabstandeten Fräsen auf einer Achse angeordnet sind und rotierende Werkzeuge aufweisen, wobei die Streifenfräse eine Anzahl von Vorrichtungen zum Einbringen von Dünger aufweist, die wenigstens der Anzahl der Fräsen zur Erzeugung von Fräskanälen entspricht.

Unter Unterfußdüngung versteht man die Einbringung von Dünger unmittelbar neben oder unter einem unter der Saatbeetoberfläche angeordneten Saatgut. Das Pflanzenwachstum von zum Beispiel Mais ist vom Aufgang bis Anfang Juli relativ langsam, das Jugendwachstum sollte daher mit einer reichlichen Nährstoffversorgung im tatsächlich zu diesem Zeitpunkt durchwurzelten Bereich gefördert werden. Hier hilft die Unterfußdüngung. Die Unterfußdüngung ermöglicht die schnelle Bereitstellung pflanzenverfügbarer Nährstoffe in direkter räumlicher Nähe zu dem Saat- oder Pflanzgut. Dadurch wird die Gefahr von Mangelsituationen im Frühjahr reduziert, wodurch die Entwicklung der Pflanze in der Regel ungehindert erfolgt.

In der Landwirtschaft ist die Unterfußdüngung ein bekanntes Verfahren. Als Unterfußdünger eigenen sich zum Beispiel PRP Explorer (www.prp-technologies.eu) oder alle zur Unterfußdüngung geeigneten Dünger, Cultan-Dünger, Düngerbänder, Effektive Mikroorganismen (EM), Gülle, Natrium-Ergänzungsdünger, Kalidünger oder Dergleichen oder eine Kombinationen der vorgenannten Substrate. Der Unterfußdünger kann in Form eines Pulvers, Granulates oder Kornes abgelegt werden oder in flüssiger Form eingebracht werden.

Bei der bekannten Unterfußdüngung wird zuerst das Saatbeet vorbereitet und dann werden mittels Scheiben oder anderen Hilfsmitteln Schlitze in das Saatbeet gezogen, wonach der Unterfußdünger in den offenen Schlitz eingebracht wird. Ob der Unterfußdünger genau bis in die gewünschte Tiefe eingebracht wird, ist bei diesem Verfahren nicht sicher gewährleistet. Jedoch muss die Düngerzugabe kontrolliert erfolgen, da ansonsten Salzschäden am Keimling (Dünger ist zu dicht am Saatgut) oder ausbleibende Düngeeffekte (Dünger ist nicht nah genug am Saatgut) auftreten können. Beispielsweise sollte der Dünger bei Mais 5 cm neben und 5 cm unterhalb der Saatkörner abgelegt werden. Anschließend wird das Saatkorn in unmittelbarer Nähe abgelegt.

Nachteilig bei der bekannten Unterfußdüngung ist, dass der Schlitz für den Dünger offen bleibt und der eingebrachte Dünger ungeschützt gegen Witterungseinflüsse ist.

Durch einen schnell einsetzenden Regen kann zum Beispiel ein Flüssigdünger ausgeschwemmt oder das Düngerkorn zu schnell aufgelöst werden. Wird der Dünger ausgeschwemmt, verliert er seine Wirkung. Wenn das Düngerkorn durch den hohen Wasserzufluss zu früh aufgelöst wird, reduziert sich seine Wirkung.

Dadurch ist der Bauer gezwungen, dieses Verfahren nur dann auszuführen, wenn es nicht unmittelbar nach Ausbringung der Unterfußdüngung anfängt zu regnen. Vorteilhaft sind ein paar Tage Trockenzeit vor und nach der Einbringung. Das zwingt ihn zu guter Planung. Da oft diese Arbeiten durch Lohnunternehmer ausgeführt werden, die diese Arbeiten in einer Region für mehrere Bauern vornehmen, kann es dann bei guter Wetterlage zu Wartezeiten bei der Maschinenverfügbarkeit kommen. Der Lohnunternehmer kann nicht alle seine Kunden zur gleichen Zeit bedienen. Das kann wiederum einen negativen Einfluss auf das Pflanzenwachstum und letztendlich auf den Ertrag des Betriebes haben.

Streifenfräsen können heute schon Dünger in ihr gefrästes Saatbeet einbringen. Allerdings wird der Dünger oberhalb der Erde während dem Fräsvorgang unpräzise miteingestreut und mit der durch die Rotoren aufgewühlten Erde durchmischt. Der Dünger befindet sich also verteilt irgendwo im Saatbeet, anstatt an einem genau definierten Ort, beispielsweise 5 cm unterhalb und 5 cm neben dem Saatkorn. Die WO 2013/033764 A1 offenbart eine Streifenfräse, bei der Dünger in die offenen gefrästen Kanäle eingestreut wird.

Es ist daher die Aufgabe der Erfindung, eine Streifenfräse zu schaffen, welche ermöglicht, zeitgleich in wenigstens zwei durch die Fräsen der Streifenfräse erzeugten Fräskanälen Dünger derart in der gewünschten Tiefe einzubringen, so dass der Dünger gegen Ausschwemmen geschützt ist und effektiv wirken kann.

Die Aufgabe wird bei einer Streifenfräse gemäß dem Anspruch 1 dadurch gelöst, dass im Bereich jeder der wenigstens zwei voneinander beabstandeten Fräsen wenigstens eine Vorrichtung zum Einbringen von Dünger angeordnet ist, wobei die Vorrichtung zum Einbringen von Dünger aus wenigstens einem Kanal zum Verbringen des Düngers besteht, wobei der wenigstens eine Kanal an seinem oberen Ende wenigstens eine Zufuhröffnung für Dünger und an dessen unteren Ende wenigstens eine Abgabeöffnung für Dünger aufweist, wobei die Abgabeöffnung für Dünger unterhalb der rotierenden Werkzeuge der wenigstens zwei voneinander beabstandeten Fräsen zur Erzeugung von Fräskanälen angeordnet ist, wobei die Streifenfräse wenigstens ein weiteres Bodenbearbeitungswerkzeug, wie einen Grubberzinken, einen Tiefenlockerer, eine Vorrichtung zum Zerkleinern und/oder Zerquetschen von Ernterückständen von Reihenkulturen oder Dergleichen, umfasst und die Abgabeöffnung der Vorrichtung zum Einbringen von Dünger gegenüber dem weiteren Bodenbearbeitungswerkzeug höhenverstellbar ist.

Streifenfräsen sind Maschinen oder Vorrichtungen, bei denen auf einer Achse eine Vielzahl von Fräsen angeordnet ist. Sie werden in der Agrarwirtschaft vor dem Säen oder dem Pflanzvorgang für die Bodenvorbereitung verwendet. Mit den Fräsen der Streifenfräse werden schmale Streifen von üblicherweise 18 cm bis 60 cm Breite in den zu bearbeitenden Acker gefräst.

Diese Fräsen greifen nicht so tief in die Erde ein wie der Pflug. Üblicherweise greift die Fräse ca. 8 cm bis 20 cm in die Erde ein.

Streifenfräsen werden auch in Kombination mit anderen Maschinen verwendet.

Da in nur einer Überfahrt mehrere Arbeitsgänge durchgeführt werden können, fährt die Zugmaschine (zum Beispiel ein Traktor), an die die Streifenfräse und die weitere Maschine angehängt sind, nur einmal über das Erdreich, wodurch das Erdreich weniger verdichtet wird, als wenn mehrere Überfahrten durch die Zugmaschine durchgeführt werden müssen. Dies reduziert die Bodenverfestigung bzw. Bodenverdichtung, die oftmals unerwünscht ist.

Mit Streifenfräsen werden gleichzeitig meist zwischen 4 bis 20 Streifen bearbeitet. Es wechseln sich somit immer nichtbearbeitete Streifen, sogenannte Zwischenstreifen, mit gefrästen Streifen ab.

Die nichtbearbeiteten Zwischenstreifen verbleiben unbearbeitet und sind somit wesentlich tragfähiger für schwere Landmaschinen als gefräste Streifen mit gelockerter Erde.

Deswegen werden die Streifenfräsen vorzugsweise auf die Spurbreite von Traktoren angepasst, so dass die Reifen der Traktoren und die Reifen der angehängten Maschine immer auf den tragfähigeren Zwischenstreifen fahren können.

Die Fräsen der Streifenfräse weisen rotierende, angetriebene Werkzeuge auf, die bevorzugt mit horizontal angeordneten Messern bestückt sind.

Durch Streifenfräsen wird ein mittelfeines Saatbeet erzeugt. Daher werden sie für Reihenkulturen mit starker Wurzelbildung, wie zum Beispiel Mais, Raps oder Soja eingesetzt.

Der Dünger kann als Pulver, Granulat oder auch in flüssiger Form vorliegen. Unter Saatgut werden im Rahmen dieser Erfindung sowohl Saatkorn oder Saatfrucht, insbesondere trockene, ruhende, generative Fortpflanzungsorgane wie Samen, Früchte, Scheinfrüchte, Fruchtstände oder Teile davon, als auch Pflanzgut (Rhizome, Knollen, Zwiebeln, Stecklinge oder Dergleichen) verstanden.

Hierbei ist vorgesehen, dass im Bereich jeder der wenigstens zwei voneinander beabstandeten Fräsen wenigstens eine Vorrichtung zum Einbringen von Dünger angeordnet ist.

Im Bereich angeordnet bedeutet hierbei, dass die Vorrichtung zum Einbringen von Dünger vor, nach oder um die Achse herum, auf der die Fräsen der Streifenfräse angeordnet sind, angeordnet sein kann. Der horizontale Abstand der Vorrichtung zum Einbringen von Dünger zu der Achse, auf der die Fräsen der Streifenfräse angeordnet sind, beträgt weniger als 100 cm, bevorzugt weniger als 75 cm und besonders bevorzugt weniger als 60 cm.

Die durch die Fräsen erzeugten Fräskanäle weisen vorzugsweise eine Breite von 18 cm bis 60 cm, bevorzugt 18 cm bis 55 cm, noch bevorzugter 18 cm bis 50 cm und am bevorzugtesten 18 cm bis 35 cm auf.

Die zwischen den Fräskanälen angeordneten Zwischenbereiche weisen vorzugsweise eine Breite von 18 cm bis 60 cm, bevorzugt 18 cm bis 55 cm, noch bevorzugter 18 cm bis 50 cm und am bevorzugtesten 18 cm bis 45 cm auf.

Es ist vorgesehen, dass die Anzahl der Vorrichtungen zum Einbringen von Dünger wenigstens der Anzahl der Fräsen zur Erzeugung von Fräskanälen entspricht. Somit ist im Bereich jeder Fräse wenigstens eine Vorrichtung zum Einbringen von Dünger angeordnet.

Die wenigstens eine Vorrichtung zum Einbringen von Dünger besteht aus wenigstens einem Kanal zum Verbringen des Düngers, wobei der wenigstens eine Kanal an seinem oberen Ende wenigstens eine Zufuhröffnung für Dünger und an dessen unteren Ende wenigstens eine Abgabeöffnung für Dünger aufweist.

Der Kanal kann als Ausnehmung, Rohr oder Schlauch oder aus mehreren miteinander verbundenen Teilabschnitten der vorgenannten Möglichkeiten ausgebildet sein, wobei seine Mantelfläche beispielsweise aus Metall, Stahl oder Kunststoff bestehen kann. Die Teilabschnitte können endfest oder lösbar miteinander verbunden sein. Im Falle, dass die Mantelfläche des Kanals aus Kunststoff besteht, kann sie fest oder biegsam ausgestaltet sein. Der Kanal oder ein Teilabschnitt des Kanals kann als Ausnehmung vorliegen. Dies wird beispielsweise dadurch erreicht, wenn ein Grubberzinken oder ein Tiefenlockerer eine Bohrung aufweist, durch die Dünger oder Saatgut verbracht wird. Die Mantelfläche des Kanals oder des Teilabschnitts des Kanals entspricht dann der Bohrfläche der Bohrung in dem Grubberzinken oder dem Tiefenlockerer.

Da die Vorrichtung zum Einbringen von Dünger wenigstens einen Kanal zum Verbringen des Düngers aufweist, kann ebenfalls vorgesehen sein, dass die Vorrichtung zum Einbringen von Dünger zwei Kanäle aufweist.

Beispielsweise wird ein Kanal für das Verbringen von Dünger und ein Kanal für das Verbringen von Saat bzw. Saatgut verwendet. Verbringen bedeutet, dass für Dünger und/oder Saatgut von der Zufuhröffnung durch den Kanal zu der Abgabeöffnung geführt wird.

Die Zufuhröffnung für Dünger ist vorzugsweise oberhalb der Streifenfräse angeordnet. An der Zufuhröffnung kann ein marktüblicher Dünger- oder Sätank über einen Schlauch oder ein Rohr befestigt werden. Durch diese Anordnung kann geeigneter Dünger aus einem mitgeführten Tank in die Vorrichtung zum Einbringen von Dünger eingespeist werden.

Die Abgabeöffnung für Dünger ist unterhalb der rotierenden Werkzeuge der wenigstens zwei voneinander beabstandeten Fräsen zur Erzeugung von Fräskanälen angeordnet.

Durch diese Ausgestaltung wird erreicht, dass Dünger in einer definierten Tiefe abgelegt werden.

Diese ist insbesondere für die Einbringung von Dünger in ein Saatbeet vorteilhaft, da der Dünger nicht durch die Fräsen in dem Saatbeet verteilt wird. Dies ist vorteilhaft, da durch diese Anordnung erreicht wird, dass der Dünger nicht zu nah an dem nachfolgend eingesäten Saatgut platziert ist. Weiterhin wird durch die rotierenden Fräsen erreicht, dass der Dünger mit gelockerter Erde zugedeckt wird. Es entstehen daher keine Schlitze zum Einbringen von Dünger, mit den oben beschriebenen Nachteilen, in das Saatbeet.

Wird Dünger mit der erfindungsgemäßen Streifenfräse mit der Vorrichtung zum Einbringen von Dünger ausgebracht, kann eine Sämaschine an der Streifenfräse zum Beispiel bei Maisanbau angehängt werden, die das Saatkorn 5 cm seitlich versetzt zum eingebrachten Dünger ablegt. Somit ist sichergestellt, dass der Dünger in der richtigen seitlichen Distanz zum Saatkorn beabstandet ist. Somit kann in einer Durchfahrt sowohl die Düngung als auch der Saatvorgang durchgeführt werden.

Die Streifenfräse umfasst wenigstens ein weiteres Bodenbearbeitungswerkzeug, wie einen Grubberzinken, einen Tiefenlockerer, eine Vorrichtung zum Zerkleinern und/oder Zerquetschen von Ernterückständen von Reihenkulturen oder Dergleichen.

Streifenfräsen fräsen das Erdreich mit ihren Messern und lockern es gleichzeitig mit einem Grubberzinken oder Tiefenlockerer auf. Der Grubberzinken oder Tiefenlockerer reißt hierbei einen Schlitz in den Boden. Wird der Dünger durch die Vorrichtung zum Einbringen von Dünger in den Schlitz, der durch den Grubberzinken oder Tiefenlockerer in die Erde eingebracht wurde, eingebracht, so wird dieser Dünger sofort nach der Ablage durch die Fräsen wieder mit gelockerter Erde zugedeckt und gegen Ausschwemmen geschützt. Das Düngerkorn wird zudem erst aufgelöst, wenn das ganze Erdreich genügend Wasser aufgenommen hat. Es löst sich damit langsamer auf und entfaltet seine Wirkung über einen längeren Zeitraum. Die Jungpflanze kann so den Dünger über eine längere Zeit aufnehmen.

Die Wurzel wird nicht kurzzeitig gedüngt oder sogar über eine kurze Zeit überdüngt und verbrannt. Dies ist besonders wertvoll für das frühe Stadium des Wurzelwachstums.

Vorteilhafterweise ist die Vorrichtung zum Einbringen von Dünger in Fahrtrichtung hinter dem weiteren Bodenbearbeitungswerkzeug angeordnet. Dies ist vorteilhaft, da durch diese Anordnung das weitere Bodenbearbeitungswerkzeug als Schutz gegen Steine und auflaufende Erde wirkt.

Gemäß der Erfindung ist ein weiteres Bodenbearbeitungswerkzeug an der Streifenfräse angeordnet, sodass die Abgabeöffnung der Vorrichtung zum Einbringen von Dünger gegenüber dem weiteren Bodenbearbeitungswerkzeug höhenverstellbar ist.

Durch diese Ausgestaltung wird erreicht, dass Dünger entsprechend der optimalen Wirktiefe in bzw. unter das Saatbeet eingebracht werden.

Ebenso kann vorteilhaft vorgesehen, dass eine Schutzvorrichtung in Fahrtrichtung vor der Vorrichtung zum Einbringen von Dünger angeordnet ist, wobei die Schutzvorrichtung als Schutz gegen Steine und auflaufende Erde wirkt.

Beispielsweise ist die Schutzvorrichtung eine Scheibe oder ein Balken. Die Schutzvorrichtung besteht vorzugsweise aus Stahl, Metall oder Kunststoff und ist an dem Rahmen der Streifenfräse befestigt. Die Vorrichtung zum Einbringen von Dünger ist während der Vorwärtsbewegung der Streifenfräse fluchtend hinter der Schutzvorrichtung angeordnet, wodurch sie gegen Steine und auflaufende Erde geschützt ist.

Mit einer entsprechend montierten und geschützten Vorrichtung zum Einbringen von Dünger kann Dünger und/oder Saatgut bis zu einer Tiefe von 50 cm oder weniger, vorzugsweise bis zu einer Tiefe von 35 cm oder weniger, zugegeben werden. Damit können Dünger sogar unter den Grubberzinken, also bis zur Pflugsohle, oder unmittelbar darüber, präzise abgelegt werden, ohne dabei eine Spur oder Schlitz im Saatbeet zu hinterlassen.

Es ist ebenso vorgesehen, dass jede der Vorrichtungen zum Einbringen von Dünger in Fahrtrichtung jeweils hinter einer der wenigstens zwei voneinander beabstandeten Fräsen der Streifenfräse oder hinter dem wenigstens einen weiteren Bodenbearbeitungswerkzeug angeordnet ist.

Eine Ausgestaltung der Erfindung sieht vor, dass die Streifenfräse mit der Vorrichtung zum Einbringen von Dünger als weiteres Bodenbearbeitungswerkzeug einen Grubberzinken oder ein Tiefenlockerer vorsieht, wobei wenigstens ein Teil des Kanals der Vorrichtung zum Einbringen von Dünger in diesem Grubberzinken oder Tiefenlockerer angeordnet ist.

Diese Ausgestaltung ist vorteilhaft, da durch die Anordnung zumindest eines Teilabschnitts des Kanals in dem Grubberzinken oder Tiefenlockerer, der Kanal gegen Steine und auflaufende Erde geschützt ist.

Im Rahmen der Erfindung ist vorteilhaft vorgesehen, dass in Fahrtrichtung vor oder hinter den wenigstens zwei voneinander beabstandeten Fräsen zur Erzeugung von Fräskanälen jeweils ein Grubberzinken oder Tiefenlockerer angeordnet ist, wobei jeweils eine Vorrichtung zum Einbringen von Dünger zwischen dem jeweiligen Grubberzinken oder dem jeweiligen Tiefenlockerer und der Achse der Streifenfräse oder hinter der Achse der Streifenfräse angeordnet ist.

Eine Ausgestaltung der Streifenfräse mit wenigstens zwei voneinander beabstandeten Fräsen zur Erzeugung von Fräskanälen, wobei die Streifenfräse wenigstens eine Vorrichtung zum Einbringen von Dünger und/oder Saatgut in ein Saatbeet aufweist, wobei die wenigstens eine Vorrichtung zum Einbringen von Dünger und/oder Saatgut in ein Saatbeet im Bereich einer der wenigstens zwei voneinander beabstandeten Fräsen angeordnet ist und aus wenigstens einem Kanal zum Verbringen des Düngers und/oder des Saatgutes besteht, wobei der wenigstens eine Kanal an seinem oberen Ende wenigstens eine Zufuhröffnung für Dünger und/oder Saatgut und an dessen unteren Ende wenigstens eine Abgabeöffnung für Dünger und/oder Saatgut aufweist und die Abgabeöffnung für Dünger und/oder Saatgut unterhalb der Saatbeetoberfläche angeordnet ist, sieht vor, dass die Vorrichtung zum Einbringen von Dünger und/oder Saatgut in ein Saatbeet aus zwei Kanälen zum Verbringen des Düngers und/oder der Saat besteht, wobei jeder der Kanäle an seinem oberen Ende wenigstens eine Zufuhröffnung für Dünger und/oder Saatgut und an dessen unteren Ende wenigstens eine Abgabeöffnung für Dünger und/oder Saatgut aufweist, wobei beide Abgabeöffnungen für Dünger und/oder Saatgut unterhalb der Saatbeetoberfläche angeordnet sind und wobei die Abgabeöffnungen horizontal und vertikal zueinander versetzt angeordnet sind.

Durch diese Ausgestaltung wird erreicht, dass der Dünger nicht direkt unter dem Saatgut angeordnet wird, wodurch Salzschäden am Keimling und ausbleibende Düngeeffekte vermieden werden. Weiterhin werden die Düngung und die Saatguteinbringung in nur einem Durchgang erreicht. Beispielsweise wird für den Maisanbau durch diese Ausgestaltung in einem Arbeitsgang ermöglicht, dass der Dünger 5 cm unterhalb und 5 cm neben dem Saatkorn eingebracht wird.

Manche Pflanzen, wie zum Beispiel Zuckermais, Zuckerrüben oder Gemüsearten, benötigen für ein schnelles Wachstum der jungen Wurzel ein feineres Beet im oberen Bereich des Erdreiches. Feineres Saat- oder Pflanzbeet bedeutet, dass die Erde zum Beispiel auf den oberen 5 cm des Saatbeetes feiner gekrümelt ist. Die junge Wurzel kann dann einfacher anwachsen, bis sie kräftig genug ist, in die untere, etwas gröbere Erdschicht, einzuwachsen. Erst wenn sie kräftig genug sind, können die Pflanzen in dieser unteren Schicht weiter gedeihen und sich dort fest verankern. Demnach ist es für diese Pflanzen vonnöten, dass ein Saatbeet mit verschiedenen Schichten mit unterschiedlichem Feinheitsgrad aufgebaut wird, nämlich ein Saatbeet mit einer unteren Schicht und einer gröberen Krümelung und einer oberen Schicht mit einer feineren Krümelung.

Im Gemüsebau werden heute Pflanzbeete mit feiner Krümelung mit Hilfe von Planierfräsen oder Beetfräsen ausgeführt, wie sie beispielsweise von der Firma Baertschi (www.baertschi.com) mit den Produkten Kultirotor oder Multirotor angeboten werden.

Alle diese Maschinen arbeiten im Gegensatz zu einer Streifenfräse nicht in mehreren schmalen Streifen mit dazwischen liegenden unbearbeiteten Streifen, sondern erstellen ein ganzes Beet über die gesamte Bearbeitungsbreite, meistens zwischen 1,20 bis 2,50 Meter Breite. Auch haben diese Maschinen keine integrierte Tiefenlockerung. Diese Maschinen verfügen über eine rotierende Welle, die sich über die gesamte Beetbreite erstreckt und die mit Werkzeugen, zum Beispiel Messer oder Mischwerkzeugen, versehen sind. Diese Wellen rotieren meist parallel zur Erde und fräsen und mischen die Erde sehr fein.

Hängt man eine derartige Planierfräse oder Beetfräse an eine Streifenfräse, könnte man zwar ein gewünschtes feineres Saatbeet herstellen, aber man würde die Zwischenstreifen mitbearbeiten und die genannten Vorteile der Zwischenstreifen verlieren. Auch wäre in dichten und schweren Böden keine Tiefenlockerung in einer Überfahrt möglich.

Für die erfindungsgemäßen Streifenfräsen ist daher weiterhin vorgesehen, dass wenigstens eine Feinfräsvorrichtung vor oder hinter der Streifenfräse angeordnet ist, wobei die wenigstens eine Feinfräsvorrichtung wenigstens ein Fräswerkzeug mit geringerer Frästiefe als die der Fräse aufweist und wobei insgesamt wenigstens zwei Fräswerkzeuge vorhanden sind. Es ist zu der Erfindung gehörig, dass weiterhin wenigstens eine (wie zuvor oben beschriebene) Vorrichtung zum Einbringen von Dünger im Bereich der Feinfräsvorrichtung angeordnet sein kann. Beispielsweise kann im Bereich der Fräse der Streifenfräse Dünger durch die Vorrichtung zum Einbringen von Dünger eingebracht werden und im Bereich der Feinfräsvorrichtung Saatgut durch die wenigstens eine weitere Vorrichtung zum Einbringen von Dünger und/oder Saatgut eingebracht werden.

Jedes der Fräswerkzeuge, das an der wenigstens einen Feinfräsvorrichtung angeordnet ist, weist eine geringere Frästiefe, vorzugsweise eine Frästiefe von 0 cm bis 15 cm, weiter bevorzugt eine Frästiefe von 1 cm bis 8 cm oder auch eine Frästiefe von 2 cm bis 5 cm auf als die Frästiefe der Fräse der Streifenfräse, die normalerweise in einer Tiefe von 8 cm bis 20 cm arbeitet.

Das Fräswerkzeug kann beispielsweise eine Beetfräse, eine Planierfräse oder ein Welle mit Erhöhungen oder Messern sein. Die Erhöhungen oder Messer können auf der Welle aufgeschweißt oder aufgeschraubt sein. Da insgesamt wenigstens zwei Fräswerkzeuge vor oder hinter der Streifenfräse (in Fahrtrichtung) angeordnet sind, ist vorgesehen, dass die wenigstens zwei Fräswerkzeuge Beetfräsen, Planierfräsen, Wellen mit Erhöhungen oder Messern oder eine beliebige Kombination aus diesen sind.

Weiterhin ist vorteilhaft vorgesehen, dass die wenigstens zwei Fräswerkzeuge beabstandet voneinander angeordnet sind. Dies kann auf einer Achse einer Feinfräsvorrichtung oder aber auch durch eine Vielzahl (wenigstens zwei) separater Feinfräsvorrichtungen erreicht werden.

Eine Ausgestaltung sieht erfindungsgemäß vor, dass die Streifenfräse eine Anzahl von n voneinander beabstandeten Fräsen sowie wenigstens eine Feinfräsvorrichtung mit jeweils wenigstens einem Fräswerkzeug aufweist, wobei die Anzahl der Fräswerkzeuge ebenfalls gleich n ist und jedes der Fräswerkzeuge mit einer Fräse der Streifenfräse fluchtend angeordnet ist.

Bei dieser Ausgestaltung der Erfindung ist vorgesehen, dass n ≥ 2 ist.

Beispielsweise weist die Streifenfräse vier voneinander beabstandete Fräsen und genau eine Feinfräsvorrichtung mit insgesamt ebenfalls vier voneinander beabstandeten Fräswerkzeugen auf. Jedes der Fräswerkzeuge ist dabei fluchtend mit einer Fräse der Streifenfräse angeordnet.

Hierdurch wird eine Streifenfräse mit einer Feinfräsvorrichtung geschaffen, bei welcher auf der Achse der Feinfräsvorrichtung genauso viele Fräswerkzeuge beabstandet voneinander angeordnet sind, wie die Streifenfräse Fräsen aufweist. Da die Fräswerkzeuge fluchtend zu den Fräsen der Streifenfräse angeordnet sind, befinden sich die Fräswerkzeuge in Fahrtrichtung der Streifenfräse auf derselben Linie wie die Fräsen.

Wenn die Feinfräsvorrichtung in Fahrtrichtung hinter der Streifenfräse angeordnet ist, fräsen dann die Fräswerkzeuge der Feinfräsvorrichtung die bereits durch die Fräsen der Streifenfräse gefrästen Fräskanäle.

Durch diese Ausgestaltung kann ebenfalls vorgesehen sein, dass die Streifenfräse beispielsweise vier voneinander beabstandete Fräsen sowie beispielsweise vier Feinfräsvorrichtungen mit jeweils genau einem Fräswerkzeug aufweist, wobei jede der Feinfräsvorrichtungen mit dem je einem Fräswerkzeug mit einer Fräse der Streifenfräse fluchtend angeordnet ist.

Hierbei weist die Streifenfräse mit Feinfräsvorrichtungen genauso viele Feinfräsvorrichtungen wie Fräsen auf. Jede der Feinfräsvorrichtungen ist einzeln an der Streifenfräse befestigt derart, dass jede Feinfräsvorrichtung, die ein Fräswerkzeug aufweist, fluchtend mit einer der Fräsen der Streifenfräse angeordnet ist.

Durch diese Ausgestaltung kann ebenfalls vorgesehen sein, dass die Streifenfräse beispielsweise vier voneinander beabstandete Fräsen sowie wenigstens zwei Feinfräsvorrichtungen mit jeweils wenigstens einem Fräswerkzeug aufweist, wobei die Anzahl der Fräswerkzeuge insgesamt in diesem Beispiel ebenfalls vier ist und jedes der vier Fräswerkzeuge mit einer Fräse der Streifenfräse fluchtend angeordnet ist.

Es ist damit demnach vorgesehen, dass wenigstens zwei Feinfräsvorrichtungen einer Anzahl n von Fräsen (wobei n ≥ 2 ist) zugeordnet sind, wobei die Anzahl der Feinfräsvorrichtungen geringer ist als die Gesamtanzahl n der Fräsen der Streifenfräse.

Beispielsweise weist eine Streifenfräse vier Fräsen auf.

An der Streifenfräse, wobei die Streifenfräse wenigstens eine Vorrichtung zum Einbringen von Dünger und/oder Saatgut in ein Saatbeet aufweist, können dann beispielsweise
- zwei Feinfräsvorrichtungen mit jeweils zwei voneinander beabstandeten Fräswerkzeugen,
- zwei Feinfräsvorrichtungen, wobei eines der beiden Feinfräsvorrichtungen ein Fräswerkzeug und das andere der beiden Feinfräsvorrichtungen drei voneinander beabstandete Fräswerkzeuge aufweist, oder
- drei Feinfräsvorrichtungen, wobei zwei der Feinfräsvorrichtungen jeweils ein Fräswerkzeug und die dritte Feinfräsvorrichtung zwei voneinander beabstandete Fräswerkzeuge aufweist,
jeweils über wenigstens zwei Befestigungsmittel an der Streifenfräse angeordnet sein, wobei jedes der Fräswerkzeuge fluchtend zu einer der Fräsen (und damit im gefrästen Kanal der Fräse) angeordnet ist.

Wie in dem Beispiel der Streifenfräse mit vier Fräsen dargestellt, ist die Anzahl der Feinfräsvorrichtungen (hier maximal 3) geringer als die Anzahl n (hier 4) der Fräsen.

Als weitere Ausgestaltung ist erfindungsgemäß vorgesehen, dass die Streifenfräse wenigstens n voneinander beabstandete Fräsen aufweist und die wenigstens eine Feinfräsvorrichtung insgesamt n - 1 voneinander beabstandete Fräswerkzeuge aufweist, wobei jedes der Fräswerkzeuge einem Zwischenbereich zweier benachbarter Fräsen der Streifenfräse zugeordnet ist.

Bei dieser Ausgestaltung der Erfindung ist vorgesehen, dass n ≥ 3 ist, wodurch n -1 ≥ 2 ist.

Die Fräswerkzeuge sind hierbei nicht fluchtend zu den Fräsen der Streifenfräse und damit nicht im Fräskanal angeordnet, sondern die Fräswerkzeuge der Feinfräsvorrichtung fräsen den Zwischenstreifen.

Dies ist vorteilhaft, um konkurrierende Pflanzen, die auf dem Zwischenstreifen wachsen, im selben Arbeitsdurchgang an ihrer Ausbreitung und Ausnutzung des Bodens zu reduzieren (Konkurrenzbekämpfung).

Hierbei ist vorteilhaft vorgesehen, dass die Streifenfräse wenigstens drei voneinander beabstandete Fräsen sowie wenigstens zwei Feinfräsvorrichtungen mit jeweils wenigstens einem Fräswerkzeug aufweist, wobei die Anzahl der Fräswerkzeuge insgesamt geringer ist als die der Fräsen und wobei jedes der Fräswerkzeuge einem Zwischenbereich zweier benachbarter Fräsen der Streifenfräse zugeordnet ist.

Auch hier sind die Fräswerkzeuge nicht fluchtend zu den Fräsen der Streifenfräse angeordnet, sondern die Fräswerkzeuge fräsen den Zwischenstreifen. Hierbei ist jedoch vorgesehen, dass ein Feinfräswerkzeug ein oder mehrere Fräswerkzeuge aufweist, wobei jedes der Fräswerkzeuge in einem Zwischenbereich zweier benachbarter Fräsen angeordnet ist und das wenigstens eine zweite Feinfräswerkzeug ebenfalls ein oder mehrere Fräswerkzeuge aufweist, wobei jedes der Fräswerkzeuge in einem Zwischenbereich zweier benachbarter Fräsen angeordnet ist. Insgesamt betrachtet wird dann jeder Zwischenstreifen durch ein Fräswerkzeug gefräst.

Es ist im Rahmen der Erfindung vorgesehen, dass die Breite der Fräswerkzeuge im Wesentlichen der Breite der Fräse oder der Breite der Zwischenbereiche zwischen zwei benachbarten Fräsen entspricht.

Damit haben die Fräswerkzeuge die Breite des gefrästen Fräskanals und können diesen auf dessen Breite gleichmäßig bearbeiten. Die übliche Breite eines Fräswerkzeuges beträgt somit 18 cm bis 60 cm, bevorzugt 25 cm bis 55 cm, noch bevorzugter 30 cm bis 50 cm und am bevorzugtesten 30 cm bis 45 cm.

Es ist zu der Erfindung gehörig, dass die wenigstens eine Feinfräsvorrichtung und/oder das wenigstens eine Fräswerkzeug über die Hydraulik eines Zugfahrzeuges zum Bewegen der Streifenfräse mit einem Hydraulikmotor, über das Getriebe der Streifenfräse, über einen Elektromotor oder über einen eigenen Hydraulikkreislauf mit Hydraulikmotor und Hydrauliköltank antreibbar sind.

Die Feinfräsvorrichtung(en) oder die einzelnen Fräswerkzeuge können direkt über die Hydraulik des Zugfahrzeuges mit einem Hydraulikmotor angetrieben werden. Weiter ist es möglich, dass die wenigstens eine Feinfräsvorrichtung, die Fräse oder die einzelnen Fräswerkzeuge vom Getriebe der Streifenfräse angetrieben werden. Dies geschieht am besten mittels Kraftübertragung durch Wellen, Ketten, Riemen oder handelsüblicher Gelenkwellen. Auch ist es möglich, dass die wenigstens eine Feinfräsvorrichtung oder die einzelnen Fräswerkzeuge über einen Elektromotor betrieben werden. Weiter denkbar ist, dass die wenigstens eine Feinfräsvorrichtung oder die einzelnen Fräswerkzeuge über einen eigenen Hydraulikkreislauf mit Hydraulikmotor und Hydrauliköltank verfügen. Die wenigstens eine Feinfräsvorrichtung kann auch mittels einer Welle, insbesondere einer Gelenkwelle, direkt vom Zugfahrzeug betrieben werden.

Im Rahmen der Erfindung ist weiterhin vorteilhaft vorgesehen, dass die wenigstens zwei Fräsen der Streifenfräse wenigstens eine Vorrichtung zum Zerkleinern und/oder Zerquetschen von Ernterückständen von Reihenkulturen, insbesondere im Boden festsitzenden und mit Wurzeln versehenen Stoppeln oder auf dem Boden liegenden Stoppeln aufweisen. Diese Vorrichtung weist wenigstens einen feststehenden Körper und wenigstens einen parallel zu dem wenigstens einen feststehenden Körper angetriebenen rotierenden Körper auf. Zwischen dem wenigstens einen feststehenden Körper und dem wenigstens einen angetriebenen rotierenden Körper ist ein Durchgang für die Ernterückstände angeordnet, dessen Querschnitt zumindest bereichsweise schmaler ist als der Querschnitt der durch den Durchgang durchtretenden Ernterückstände. Es ist weiterhin vorgesehen, dass der feststehende Körper ein Balken oder eine Scheibe ist und dass an dem Balken oder der Scheibe wenigstens ein weiteres Mittel zum Zerkleinern und/oder Zerquetschen der Ernterückstände angeordnet ist. Weiterhin kann an der Vorrichtung zum Zerkleinern und/oder Zerquetschen von Ernterückständen von Reihenkulturen ein Grubberzinken oder ein Tiefenlockerer angeordnet sein. Der Grubberzinken oder Tiefenlockerer kann als feststehender Körper fungieren oder zusätzlich an der Vorrichtung zum Zerkleinern und/oder Zerquetschen angeordnet sein. Der wenigstens eine angetriebene rotierende Körper kann einer der beiden rotierenden Werkzeuge der Fräse der Streifenfräse sein, wobei die Werkzeuge bevorzugt mit horizontal angeordneten Messern bestückt sind.

Damit die gelockerte Erde durch Wind oder starken Regenfall nicht weggetragen wird, können an der erfindungsgemäßen Streifenfräse, wobei die Streifenfräse wenigstens eine Vorrichtung zum Einbringen von Dünger in ein Saatbeet aufweist, Packerwalzen nachgeführt werden. Diese Packerwalzen drücken die lose Erde an.

Bei den typischen Packerwalzen sind auf einer gemeinsamen Achse Packerwalzenwerkzeuge, z.B. mehrere sternförmige Räder, aufgesetzt.

Ein Packerwalzenwerkzeug kann aus einer Walze, einer Scheibe mit sternförmigen Zacken, einem Gummirad, oder Dergleichen, oder auch einer Kombination aus den vorgenannten Werkzeugen sowie einer Vielzahl und/oder Kombination der vorgenannten Werkzeuge bestehen. Normalerweise werden die Packerwalzenwerkzeuge auf einer durchgehenden Achse aufgesteckt, geschraubt, geschweißt oder geklemmt.

Auch bei der Verwendung von Packerwalzen, die an einer Streifenfräse angehängt sind, besteht die Packerwalze aus einer durchgehenden Achse, die sich über die Gesamtbreite der Streifenfräse erstreckt.

Die Achse ist an zwei Punkten (Enden der Achse) über Befestigungsmittel an der Streifenfräse befestigt.

Bei marktüblichen Packerwalzen sind die Packerwalzenwerkzeuge auf der Achse befestigt, wobei die Packerwalzenwerkzeuge über die gesamte Arbeitsbreite möglichst gleichmäßig verteilt sind.

Packerwalzen sind in der Regel nicht angetrieben, sondern laufen lose mit dem Maschinenvortrieb mit und erfüllen ihre Funktion durch den Anpressdruck und ihr Eigengewicht.

Wird die Packerwalze in Kombination mit einer Streifenfräse verwendet, sind die Packerwalzenwerkzeuge auf der gemeinsamen Achse beabstandet voneinander angeordnet und so platziert, dass sie dort (in sogenannten Fräskanälen) angeordnet sind, wo zuvor der Acker durch die Fräsen der Streifenfräse gefräst wurde.

Weiterhin haben Packerwalzen die Funktion grobe Erdschollen, die sich durch den Fräsvorgang bilden können, zu zerdrücken und somit ein gleichmäßiges flaches Bett innerhalb des Frässtreifens bzw. des Fräskanals für den nachfolgenden Sähvorgang herzustellen. Ebenfalls bereiten die Packerwalzen das Saatbett für die nachfolgenden Sähmaschinen in der Höhe optimal und gleichmäßig vor, so dass der Samen gleichmäßiger in der Tiefe abgelegt werden kann.

Durchgehende Packerwalzen haben hier den Nachteil, dass sie nicht auf der gesamten Breite eine optimale Höhe des Saatbettes erzielen.

Je nach Wunsch und Einstellung kann die Packerwalze mehr oder weniger Druck auf die Erde ausüben. Dies kann manuell durch Verstellen der Packerwalze an den beiden Befestigungspunkten links und rechts an der Maschine erreicht werden. Wird die Packerwalze weiter herabgesetzt, übt sie mehr Druck auf das Erdreich aus, und umgekehrt. Auch kann dies stufenlos mit Hilfe von Hydraulikzylindern erreicht werden, die links und rechts an den Befestigungspunkten der Packerwalze angebracht sind.

Der Druck auf die Erde durch eine Packerwalze kann somit einfach durch Verstellen an den beiden Enden eingestellt werden. Es wird dabei immer der Druck der ganzen Packerwalze über die gesamte Maschinenbreite verändert.

Packerwalzen mit durchgehender Achse haben den Nachteil, dass sie teuer in der Herstellung sind und dass sie nur über die gesamte Arbeitsbreite höhenverstellbar sind. Zudem wird die Packerwalze bei Anwendung mit einer Streifenfräse ausschließlich im Bereich des gefrästen Streifens benötigt. Der unbearbeitete Zwischenstreifen braucht jedoch keine Rückverfestigung von loser Erde.

Eine weitere Ausgestaltung der Streifenfräse, wobei die Streifenfräse wenigstens eine Vorrichtung zum Einbringen von Dünger und/oder Saatgut in ein Saatbeet aufweist, sieht daher vor, dass die Streifenfräse mindestens zwei Packerwalzenmodule umfasst, wobei jedes der Packerwalzenmodule eine eigene Achse aufweist, auf der wenigstens ein Packerwalzenwerkzeug angeordnet ist.

An die erfindungsgemäße Streifenfräse sind somit wenigstens zwei Packerwalzenmodule angehängt. Pro Packerwalzenmodul, das jeweils eine eigene Achse aufweist, ist wenigstens ein Packerwalzenwerkzeug angeordnet. Es ist im Rahmen der Erfindung vorgesehen, dass jeder Fräse der Streifenfräse ein Packerwalzenwerkzeug fluchtend zugeordnet ist.

Somit weist eine Streifenfräse mit vier Fräsen und damit vier Fräskanälen vier Packerwalzenwerkzeuge auf. Diese vier Packerwalzenwerkzeuge sind auf wenigstens zwei Achsen der wenigstens zwei Packerwalzenmodule angeordnet.

Jedes der Packerwalzenwerkzeuge kann aus einer Walze, einer Scheibe mit sternförmigen Zacken, einem Gummirad oder Dergleichen oder einer Kombinationen aus den vorgenannten Werkzeugen sowie einer Vielzahl der vorgenannten Werkzeuge bestehen.

Der Vorteil einer Streifenfräse, kombiniert mit mehreren schmalen Packerwalzenmodulen und damit wenigstens zwei Achsen, gegenüber einer Streifenfräse mit einer Packerwalze, die auf einer Achse mehrere Packerwalzenwerkzeuge aufweist, liegt darin, dass die Packerwalzenmodule deutlich günstiger hergestellt werden können als die herkömmlichen großen und schweren einachsigen Packerwalzen.

Einachsige Packerwalzen müssen sehr präzise und aufwändig hergestellt werden, um über die gesamte Maschinenbreite einen guten Rundlauf zu haben.

Die Packerwalzenmodule, die einzeln befestigt werden, können leichter gebaut werden als die großen schweren Packerwalzen, die sich über die gesamte Maschinenbreite erstrecken.

Auch sind die Befestigungspunkte solch großer Packerwalzen deutlich massiver auszulegen als die der vorgeschlagenen Packerwalzenmodule. Mehrere schmale Packerwalzenmodule sparen somit Maschinengewicht, welches wiederum die unerwünschte Bodenverdichtung reduziert. Dies schützt den Boden vor Erosion, da Regenwasser besser versickern kann.

Eine Ausgestaltung der Erfindung sieht vorteilhaft vor, dass jedes der wenigstens zwei Packerwalzenmodule eine eigene Achse aufweist, auf der genau ein Packerwalzenwerkzeug angeordnet ist und jedes der wenigstens zwei Packerwalzenmodule fluchtend zu jeweils einer der wenigstens zwei voneinander beabstandeten Fräsen der Streifenfräse angeordnet ist.

Bei dieser Ausgestaltung sind somit genauso viele Fräsen wie Packerwalzenmodule und Packerwalzenwerkzeuge vorhanden. In dem Fräskanal einer jeden Fräse ist fluchtend ein Packerwalzenmodul mit dem dazugehörigen Packerwalzenwerkzeug angeordnet.

Eine weitere Ausgestaltung sieht vorteilhaft vor, dass wenigstens zwei Packerwalzenmodule einer Anzahl n von Fräsen zugeordnet sind, wobei die Anzahl m der Packerwalzenmodule geringer ist als die Gesamtanzahl n der Fräsen.

Bei dieser Ausgestaltung der Erfindung ist vorgesehen, dass wenigstens zwei Packerwalzenmodule einer Anzahl n von Fräsen zugeordnet sind.

Beispielsweise weist eine Streifenfräse vier Fräsen auf.

An der Streifenfräse können dann beispielsweise
- zwei Packerwalzenmodule mit jeweils zwei voneinander beabstandeten Packerwalzenwerkzeugen,
- zwei Packerwalzenmodule, wobei eines der beiden Packerwalzenmodule ein Packerwalzenwerkzeug und das andere der beiden Packerwalzenmodule drei voneinander beabstandete Packerwalzenwerkzeuge aufweist, oder
- drei Packerwalzenmodule, wobei zwei der Packerwalzenmodule jeweils ein Packerwalzenwerkzeug und das dritte Packerwalzenmodul zwei voneinander beabstandete Packerwalzenwerkzeuge aufweist,
jeweils über wenigstens zwei Befestigungsmittel an der Streifenfräse angeordnet sein, wobei jedes der Packerwalzenwerkzeuge fluchtend zu der Fräse (im gefrästen Kanal der Fräse) angeordnet ist.

Wie in dem Beispiel der Streifenfräse mit vier Fräsen dargestellt, ist die Anzahl m (hier maximal 3) der Packerwalzenmodule geringer als die Anzahl n (hier 4) der Fräsen.

Eine vorteilhafte Ausgestaltung der Erfindung sieht vor, dass die Befestigungsmittel an der Streifenfräse höhenverstellbar sind.

Hierdurch wird vorteilhaft erreicht, dass der Druck auf die Erde je Packerwalzenmodul unterschiedlich eingestellt werden kann.

Das führt je nach Boden zu besseren Resultaten und besserem Pflanzenwachstum.

Ebenso ist vorstellbar, dass die Befestigungen der Packerwalzenmodule an der Streifenfräse mit einer Verstellvorrichtung versehen sind, zum Beispiel mehrere versetzte Befestigungspunkte, wodurch jedes der Packerwalzenmodule in unterschiedlicher Höhe angebracht werden kann.

Es ist ebenfalls im Rahmen der Erfindung vorteilhaft vorgesehen, dass die wenigstens zwei Packerwalzenmodule über die Befestigungsmittel federnd an der Streifenfräse befestigt sind.

Dies ermöglicht eine gleichmäßige Höhenführung der Packerwalzenmodule für den nachfolgenden Sähvorgang. Dies beruht darauf, dass wenn ein einzelnes Packerwalzenmodul durch Steine oder größere Unebenheiten angehoben wird, das wenigstens eine benachbarte Packerwalzenmodul nicht vom Boden gelöst wird, da es separat an der Streifenfräse federnd befestigt ist.

Das ist bei großen einachsigen Packerwalzen, die sich über die gesamte Maschinenbreite erstrecken, nicht möglich. So würde die einachsige Packerwalze wegen eines Steins in der Mitte angehoben, wodurch in diesem Moment in den daneben liegenden Fräskanälen die Erde nicht mehr rückverfestigt werden würde, da in diesen Fräskanälen die Packerwalze vom Boden abgehoben würde.

Weiterhin ist vorteilhaft vorgesehen, dass die Packerwalzenmodule einzeln mit einem Hydraulikzylinder oder einem Federpacket versehen sind, wodurch die Packerwalzenmodule stufenlos verstellt werden können.

Vorteilhaft ist weiterhin vorgesehen, dass die Breite jedes der Packerwalzenwerkzeuge im Wesentlichen der Breite jeder Fräse entspricht.

Wie oben beschrieben, kann das Packerwalzenwerkzeug aus einer Walze, einer Scheibe mit sternförmigen Zacken, einem Gummirad oder Dergleichen oder einer Kombinationen aus den vorgenannten Werkzeugen sowie einer Vielzahl der vorgenannten Werkzeuge bestehen.

Es ist ebenfalls im Rahmen der Erfindung vorgesehen, dass die erfindungsgemäßen Streifenfräsen neben der Feinfräsvorrichtung mindestens ein Packerwalzenmodul umfassen, wobei das mindestens eine Packerwalzenmodul eine eigene Achse aufweist, auf der wenigstens ein Packerwalzenwerkzeug angeordnet ist.

An die Streifenfräse sind somit zusätzlich zu der wenigstens einen Feinfräsvorrichtung wenigstens ein Packerwalzenmodul angehängt. Pro Packerwalzenmodul, das jeweils eine eigene Achse aufweist, ist wenigstens ein Packerwalzenwerkzeug angeordnet. Es ist im Rahmen der Erfindung vorgesehen, dass jeder Fräse der Streifenfräse ein Packerwalzenwerkzeug fluchtend zugeordnet ist.

Somit weist eine Streifenfräse mit vier Fräsen und damit vier Fräskanälen vier Packerwalzenwerkzeuge auf. Diese vier Packerwalzenwerkzeuge sind vorzugsweise auf wenigstens zwei Achsen der wenigstens zwei Packerwalzenmodule angeordnet.

Jedes der Packerwalzenwerkzeuge kann aus einer Walze, einer Scheibe mit sternförmigen Zacken, einem Gummirad oder Dergleichen oder einer Kombinationen aus den vorgenannten Werkzeugen sowie einer Vielzahl der vorgenannten Werkzeuge bestehen.

Der Vorteil einer Streifenfräse, kombiniert mit mehreren schmalen Packerwalzenmodulen und damit wenigstens zwei Achsen, gegenüber einer Streifenfräse mit einer Packerwalze, die auf einer Achse mehrere Packerwalzenwerkzeuge aufweist, liegt darin, dass die Packerwalzenmodule deutlich günstiger hergestellt werden können als die herkömmlichen großen und schweren einachsigen Packerwalzen.

Nachfolgend wird die Erfindung anhand von Zeichnungen näher, aber nicht darauf beschränkt, beschrieben. Es zeigen
- Fig. 1: einen Ausschnitt eines Schnitts durch eine Fräse einer Streifenfräse mit einem Grubberzinken und einer Vorrichtung zum Einbringen von Dünger und/oder Saatgut in perspektivische Ansicht,
- Fig. 2: einen Ausschnitt eines Schnitts durch eine Fräse einer Streifenfräse mit einem Grubberzinken und einer Vorrichtung zum Einbringen von Dünger und/oder Saatgut in Seitenansicht,
- Fig. 3: einen Ausschnitt einer Streifenfräse mit einem Grubberzinken und einer Vorrichtung zum Einbringen von Dünger und/oder Saatgut in Seitenansicht,
- Fig. 4: einen Ausschnitt eines Schnitts durch eine Fräse einer Streifenfräse mit einem Grubberzinken und einer Vorrichtung zum Einbringen von Dünger und/oder Saatgut, wobei die Vorrichtung zum Einbringen von Dünger und/oder Saatgut zwei Kanäle aufweist, in perspektivische Ansicht,
- Fig. 5: einen Ausschnitt einer Streifenfräse mit einem Grubberzinken und einer Vorrichtung zum Einbringen von Dünger und/oder Saatgut, wobei die Vorrichtung zum Einbringen von Dünger und/oder Saatgut im Schatten des Stils des Grubberzinkens angeordnet ist, in Frontalansicht.

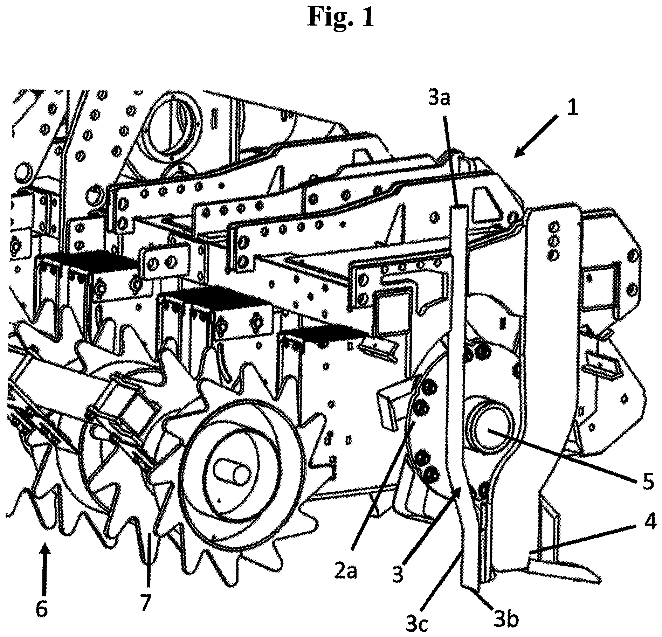

In Fig. 1 ist ein Schnitt durch eine der wenigstens zwei Fräsen zur Erzeugung von Fräskanälen in perspektivischer Ansicht gezeigt. Perspektivisch vor einer der rotierenden Werkzeuge bzw. Scheiben (2a) (mit Messern) der Fräse ist eine Vorrichtung (3) zum Einbringen von Dünger in ein Saatbeet dargestellt. Die Vorrichtung (3) zum Einbringen von Dünger in ein Saatbeet ist im Bereich einer der wenigstens zwei voneinander beabstandeten Fräsen angeordnet. Die Vorrichtung (3) zum Einbringen von Dünger in ein Saatbeet besteht aus einem Kanal (3c) zum Verbringen des Düngers, wobei der Kanal (3c) an seinem oberen Ende eine Zufuhröffnung (3a) für Dünger und an dessen unteren Ende wenigstens eine Abgabeöffnung (3b) für Dünger aufweist. Es ist vorgesehen, dass Abgabeöffnung (3b) für Dünger bei Betrieb der Streifenfräse (1) unterhalb der Saatbeetoberfläche angeordnet ist. Wie dargestellt, weist die Streifenfräse (1) ein weiteres Bodenbearbeitungswerkzeug, nämlich einen Grubberzinken (4), auf. Der Grubberzinken (4) dient damit auch als Schutzvorrichtung, die in Fahrtrichtung vor der Vorrichtung (3) zum Einbringen von Dünger in ein Saatbeet angeordnet ist. Wie dargestellt, ist die Vorrichtung (3) zum Einbringen von Dünger in Fahrtrichtung hinter der Achse (5) der Fräse der Streifenfräse (1) und hinter dem weiteren Bodenbearbeitungswerkzeug, hier dem Grubberzinken (4), angeordnet. Weiterhin ist dargestellt, dass die Streifenfräse (1) mindestens ein Packerwalzenmodul (6) umfasst, wobei das mindestens eine Packerwalzenmodul (6) eine eigene Achse aufweist, auf der wenigstens ein Packerwalzenwerkzeug (7) angeordnet ist.

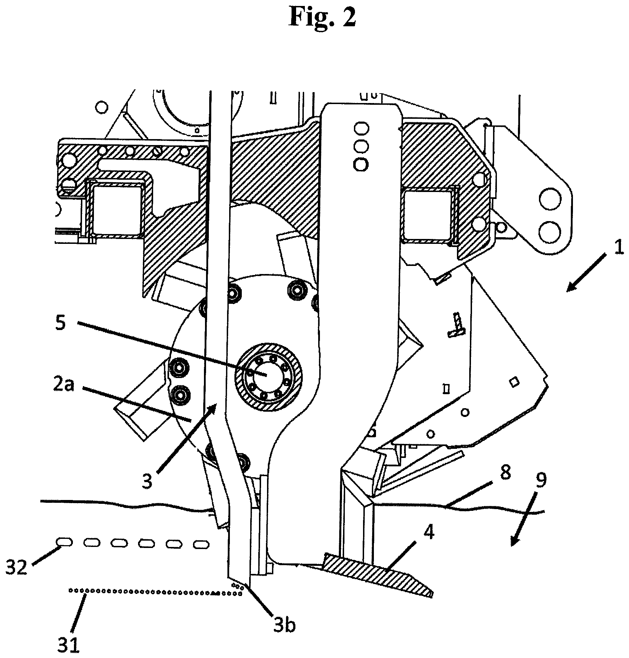

In Fig. 2 ist ein Schnitt durch eine der wenigstens zwei Fräsen zur Erzeugung von Fräskanälen in Seitenansicht dargestellt. Die Vorrichtung (3) zum Einbringen von Dünger (31) und Saatgut (32) in ein Saatbeet (9) ist im Bereich einer der wenigstens zwei voneinander beabstandeten Fräsen angeordnet. Die Vorrichtung (3) zum Einbringen von Dünger und Saatgut in ein Saatbeet besteht aus einem Kanal zum Verbringen des Düngers, wobei der Kanal an seinem oberen Ende eine Zufuhröffnung für Dünger und/oder Saatgut und an dessen unteren Ende wenigstens eine Abgabeöffnung (3b) für Dünger aufweist. Es ist vorgesehen, dass Abgabeöffnung (3b) für Dünger bei Betrieb der Streifenfräse (1) unterhalb der Saatbeetoberfläche (8) angeordnet ist. Wie dargestellt, weist die Streifenfräse (1) ein weiteres Bodenbearbeitungswerkzeug, nämlich einen Grubberzinken (4), auf. Der Grubberzinken (4) dient damit auch als Schutzvorrichtung, die in Fahrtrichtung vor der Vorrichtung (3) zum Einbringen von Dünger und Saatgut angeordnet ist. Wie dargestellt, ist die Vorrichtung (3) zum Einbringen von Dünger und Saatgut in Fahrtrichtung hinter dem weiteren Bodenbearbeitungswerkzeug (4) und hinter der Achse (5) der Fräse der Streifenfräse (1) angeordnet.

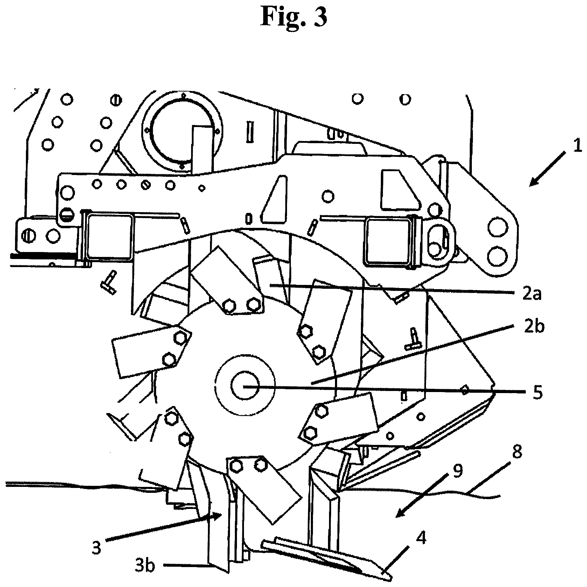

In Fig. 3 ist ein Ausschnitt der erfindungsgemäßen Streifenfräse in Seitenansicht dargestellt. Die Vorrichtung (3) zum Einbringen von Dünger (31) in ein Saatbeet (9) ist im Bereich einer der wenigstens zwei voneinander beabstandeten Fräsen angeordnet.

Die gezeigte Fräse besteht aus zwei rotierenden Werkzeugen (2a, 2b), die auf einer Achse (5) angeordnet sind. Die Vorrichtung (3) zum Einbringen von Dünger in ein Saatbeet besteht aus einem Kanal zum Verbringen des Düngers, wobei der Kanal an seinem oberen Ende eine Zufuhröffnung für Dünger und an dessen unteren Ende wenigstens eine Abgabeöffnung (3b) für Dünger aufweist. Wie dargestellt, ist die Abgabeöffnung (3b) für Dünger bei Betrieb der Streifenfräse (1) unterhalb der Saatbeetoberfläche (8) angeordnet. Wie dargestellt, ist die Abgabeöffnung (3b) für Dünger sogar unterhalb der rotierenden Werkzeuge (2a, 2b) der wenigstens zwei voneinander beabstandeten Fräsen zur Erzeugung von Fräskanälen angeordnet. Wie dargestellt, weist die Streifenfräse (1) ein weiteres Bodenbearbeitungswerkzeug, nämlich einen Grubberzinken (4), auf. Der Grubberzinken (4) dient damit auch als Schutzvorrichtung, die in Fahrtrichtung vor der Vorrichtung (3) zum Einbringen von Dünger angeordnet ist. Wie dargestellt, ist die Vorrichtung (3) zum Einbringen von Dünger in Fahrtrichtung hinter dem weiteren Bodenbearbeitungswerkzeug (4) und hinter der Achse (5) der Fräse der Streifenfräse (1) angeordnet.

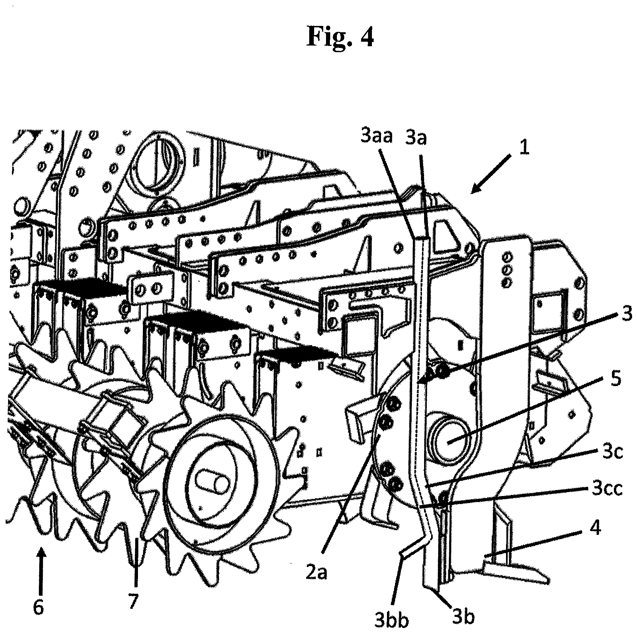

In Fig. 4 ist eine andere erfindungsgemäße Streifenfräse (1) mit einer Vorrichtung (3) zum Einbringen von Dünger und Saatgut in perspektivischer Schnittansicht dargestellt. Die Vorrichtung (3) zum Einbringen von Dünger und Saatgut in ein Saatbeet besteht aus zwei Kanälen (3c, 3cc) zum Verbringen des Düngers und der Saat, wobei jeder der Kanäle an seinem oberen Ende eine Zufuhröffnung für Dünger (3a) und Saatgut (3aa) und an dessen unteren Ende zwei Abgabeöffnungen für Dünger (3b) und Saatgut (3bb) aufweist, wobei beide Abgabeöffnungen (3b, 3bb) für Dünger und/oder Saatgut unterhalb der Saatbeetoberfläche angeordnet sind und wobei die Abgabeöffnungen (3b, 3bb) horizontal und vertikal zueinander versetzt angeordnet sind. Beide Abgabeöffnungen (3b, 3bb) sind in Fahrtrichtung im Schatten des Grubberzinkens (4) angeordnet. Die Abgabeöffnung für Dünger (3b) ist vorzugsweise unterhalb der Fräswerkzeuge (2a) angeordnet. Vorzugsweise ist die Abgabeöffnung von Saatgut (3bb) derart angeordnet, so dass die Fräswerkzeuge das Saatgut nicht vermischen, d.h. vorzugsweise in Fahrtrichtung hinter dem Eingriffsradius der Fräse.

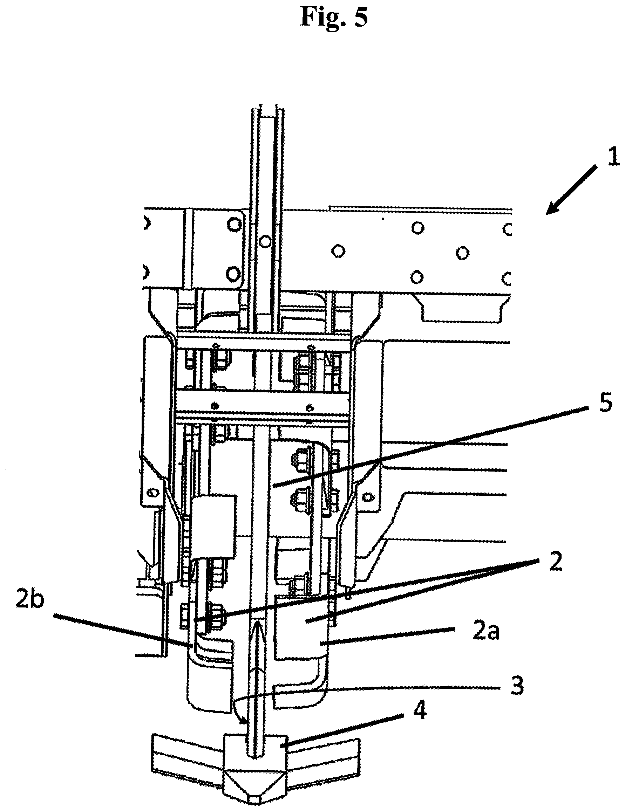

In Fig. 5 ist eine weitere Ausgestaltung der erfindungsgemäßen Streifenfräse (1) mit Vorrichtung (3) zum Einbringen von Dünger und/oder Saatgut in frontaler Schnittansicht dargestellt. Die Streifenfräse weist als weiteres Bodenbearbeitungswerkzeug einen Grubberzinken (4) auf. Wenigstens ein Teil des Kanals der Vorrichtung (3) zum Einbringen von Dünger oder Saatgut in ein Saatbeet ist in diesem Grubberzinken (4) angeordnet.

## Patentansprüche

1. Streifenfräse (1) zur Erzeugung eines mittelfeinen Saatbeets mit wenigstens zwei voneinander beabstandeten Fräsen (2) zur Erzeugung von Fräskanälen, die sich mit nichtbearbeiteten Zwischenstreifen abwechseln, wobei die wenigstens zwei voneinander beabstandeten Fräsen (2) auf einer Achse (5) angeordnet sind und rotierende Werkzeuge (2a, 2b) aufweisen, wobei die Streifenfräse (1) eine Anzahl von Vorrichtungen (3) zum Einbringen von Dünger aufweist, die wenigstens der Anzahl der Fräsen (2) zur Erzeugung von Fräskanälen entspricht, wobei im Bereich jeder der wenigstens zwei voneinander beabstandeten Fräsen (2) wenigstens eine Vorrichtung (3) zum Einbringen von Dünger (31) angeordnet ist, wobei die Vorrichtung (3) zum Einbringen von Dünger (31) aus wenigstens einem Kanal (3c) zum Verbringen des Düngers (31) besteht, wobei der wenigstens eine Kanal (3c) an seinem oberen Ende wenigstens eine Zufuhröffnung (3a) für Dünger und an dessen unteren Ende wenigstens eine Abgabeöffnung (3b) für Dünger aufweist, wobei die Abgabeöffnung (3b) für Dünger unterhalb der rotierenden Werkzeuge (2a, 2b) der wenigstens zwei voneinander beabstandeten Fräsen (2) zur Erzeugung von Fräskanälen angeordnet ist, wobei die Streifenfräse (1) wenigstens ein weiteres Bodenbearbeitungswerkzeug, wie einen Grubberzinken (4), einen Tiefenlockerer, eine Vorrichtung zum Zerkleinern und/oder Zerquetschen von Ernterückständen von Reihenkulturen oder Dergleichen, umfasst, **dadurch gekennzeichnet, dass** die Abgabeöffnung (3b) der Vorrichtung (3) zum Einbringen von Dünger gegenüber dem weiteren Bodenbearbeitungswerkzeug höhenverstellbar ist.

2. Streifenfräse (1) gemäß Anspruch 1, **dadurch gekennzeichnet, dass** eine Schutzvorrichtung in Fahrtrichtung vor der Vorrichtung (3) zum Einbringen von Dünger (31) in ein Saatbeet angeordnet ist.

3. Streifenfräse (1) gemäß Anspruch 1, **dadurch gekennzeichnet, dass** die Vorrichtung (3) zum Einbringen von Dünger (31) in Fahrtrichtung jeweils hinter den wenigstens zwei voneinander beabstandeten Fräsen (2) der Streifenfräse (1) oder hinter dem wenigstens einen weiteren Bodenbearbeitungswerkzeug angeordnet ist.

4. Streifenfräse (1) gemäß Anspruch 1, **dadurch gekennzeichnet, dass** das weitere Bodenbearbeitungswerkzeug ein Grubberzinken (4) oder ein Tiefenlockerer ist und wenigstens ein Teil des Kanals (3c) der Vorrichtung (3) zum Einbringen von Dünger in diesem Grubberzinken (4) oder Tiefenlockerer angeordnet ist.

5. Streifenfräse (1) gemäß wenigstens einem der vorhergehenden Ansprüche, **dadurch gekennzeichnet, dass** in Fahrtrichtung vor oder hinter den wenigstens zwei voneinander beabstandeten Fräsen (2) zur Erzeugung von Fräskanälen jeweils ein Grubberzinken (4) oder Tiefenlockerer angeordnet ist, wobei jeweils eine Vorrichtung (3) zum Einbringen von Dünger (31) zwischen dem jeweiligen Grubberzinken (4) oder dem jeweiligen Tiefenlockerer und der Achse (5) der Streifenfräse (1) oder hinter der Achse (5) der Streifenfräse (1) angeordnet ist.

6. Streifenfräse (1) gemäß Anspruch 1, **dadurch gekennzeichnet, dass** die Vorrichtung (3) zum Einbringen von Dünger in ein Saatbeet aus zwei Kanälen (3c, 3cc) zum Verbringen des Düngers und von Saatgut besteht, wobei der weitere Kanal (3cc) an seinem oberen Ende wenigstens eine Zufuhröffnung (3aa) für Saatgut und an dessen unteren Ende wenigstens eine Abgabeöffnung (3bb) für Saatgut aufweist, wobei die wenigstens eine Abgabeöffnung (3bb) für Saatgut unterhalb der Saatbeetoberfläche angeordnet ist und wobei die Abgabeöffnungen für Dünger (3b) und Saatgut (3bb) horizontal und vertikal zueinander versetzt angeordnet sind.

7. Streifenfräse (1) gemäß Anspruch 1 oder Anspruch 6, **dadurch gekennzeichnet, dass** wenigstens eine Feinfräsvorrichtung vor oder hinter der Streifenfräse (1) angeordnet ist, wobei die wenigstens eine Feinfräsvorrichtung wenigstens ein Fräswerkzeug mit geringerer Frästiefe als die der Fräse (2) aufweist und wobei insgesamt wenigstens zwei Fräswerkzeuge vorhanden sind.

8. Streifenfräse (1) gemäß Anspruch 1 oder Anspruch 6, **dadurch gekennzeichnet, dass** die Fräsen (2) eine Vorrichtung zum Zerkleinern und/oder Zerquetschen von Ernterückständen von Reihenkulturen, insbesondere im Boden festsitzenden und mit Wurzeln versehenen Stoppeln oder auf dem Boden liegenden Stoppeln aufweisen, wobei die Vorrichtung wenigstens einen feststehenden Körper und wenigstens einen parallel zu dem wenigstens einen feststehenden Körper angetriebenen rotierenden Körper aufweist und zwischen dem wenigstens einen feststehenden Körper und dem wenigstens einen angetriebenen rotierenden Körper ein Durchgang für die Ernterückstände angeordnet ist, dessen Querschnitt zumindest bereichsweise schmaler ist als der Querschnitt der durch den Durchgang durchtretenden Ernterückstände, und der feststehende Körper ein Balken oder eine Scheibe ist und dass an dem Balken oder der Scheibe wenigstens ein weiteres Mittel zum Zerkleinern und/oder Zerquetschen der Ernterückstände angeordnet ist.

9. Streifenfräse (1) gemäß Anspruch 1 oder Anspruch 6, **dadurch gekennzeichnet, dass** die Streifenfräse (1) mindestens zwei Packerwalzenmodule (6) umfasst, wobei jedes der Packerwalzenmodule (6) eine eigene Achse aufweist, auf der wenigstens ein Packerwalzenwerkzeug (7) angeordnet ist.

10. Streifenfräse gemäß Anspruch 7, **dadurch gekennzeichnet, dass** die Streifenfräse neben der Feinfräsvorrichtung mindestens ein Packerwalzenmodul (6) umfasst, wobei das mindestens eine Packerwalzenmodul eine eigene Achse aufweist, auf der wenigstens ein Packerwalzenwerkzeug (7) angeordnet ist.

## Claims

1. Strip tiller (1) for producing a medium-fine seedbed having at least two spaced-apart tillers (2) for producing tilled rows which alternate with non-cultivated intermediate strips, wherein the at least two spaced-apart tillers (2) are arranged on a shaft (5) and comprise rotating tools (2a, 2b), wherein the strip tiller (1) comprises a number of devices (3) for applying fertiliser which corresponds at least to the number of tillers (2) for producing tilled rows, wherein at least one device (3) for applying fertiliser (31) is arranged in the region of each of the at least two spaced-apart tillers (2), wherein the device (3) for applying fertiliser (31) consists of at least one duct (3c) for dispensing the fertiliser (31), wherein the at least one duct (3c) comprises at least one feed opening (3a) for fertiliser at its upper end and at least one discharge opening (3b) for fertiliser at its lower end, wherein the discharge opening (3b) for fertiliser is arranged below the rotating tools (2a, 2b) of the at least two spaced-apart tillers (2) for producing tilled rows, wherein the strip tiller (1) comprises at least one additional cultivation tool, such as a cultivator tine (4), a subsoiler, a device for comminuting and/or crushing crop residues of row crops, or the like, **characterised in that** the discharge opening (3b) of the device (3) for applying fertiliser is height-adjustable relative to the additional cultivation tool.

2. Strip tiller (1) according to claim 1, **characterised in that** a protective device is arranged in front of the device (3) for applying fertiliser (31) to a seedbed in the direction of travel.

3. Strip tiller (1) according to claim 1, **characterised in that** the device (3) for applying fertiliser (31) is arranged behind each of the at least two spaced-apart tillers (2) of the strip tiller (1) or behind the at least one additional cultivation tool in the direction of travel.

4. Strip tiller (1) according to claim 1, **characterised in that** the additional cultivation tool is a cultivator tine (4) or a subsoiler and at least part of the duct (3c) of the device (3) for applying fertiliser is arranged in this cultivator tine (4) or subsoiler.

5. Strip tiller (1) according to at least one of the preceding claims, **characterised in that** a cultivator tine (4) or a subsoiler is arranged in front of or behind each of the at least two spaced-apart tillers (2) for producing tilled rows in the direction of travel, wherein one device (3) for applying fertiliser (31) is arranged between the respective cultivator tine (4) or the respective subsoiler and the shaft (5) of the strip tiller (1) in each case, or behind the shaft (5) of the strip tiller (1).

6. Strip tiller (1) according to claim 1, **characterised in that** the device (3) for applying fertiliser to a seedbed consists of two ducts (3c, 3cc) for applying the fertiliser and seed, wherein the additional duct (3cc) comprises at least one feed opening (3aa) for seed at its upper end and at least one discharge opening (3bb) for seed at its lower end, wherein the at least one discharge opening (3bb) for seed is arranged below the seedbed surface and wherein the discharge openings for fertiliser (3b) and seed (3bb) are arranged so as to be horizontally and vertically offset from one another.

7. Strip tiller (1) according to claim 1 or claim 6, **characterised in that** at least one fine-tilling device is arranged in front of or behind the strip tiller (1), wherein the at least one fine-tilling device comprises at least one tilling tool having a lower tilling depth than the tiller (2) and wherein at least two tilling tools are provided in total.

8. Strip tiller (1) according to claim 1 or claim 6, **characterised in that** the tillers (2) comprise a device for comminuting and/or crushing crop residues of row crops, in particular stubble embedded in the ground and having roots or stubble lying on the ground, wherein the device comprises at least one stationary body and at least one rotating body that is driven in parallel with the at least one stationary body, and a passage for the crop residues is arranged between the at least one stationary body and the at least one driven, rotating body, the cross section of which passage is narrower, at least in regions, than the cross section of the crop residues passing through the passage, and the stationary body is a bar or a disc, and **in that** at least one additional means for comminuting and/or crushing the crop residues is arranged on the bar or disc.

9. Strip tiller (1) according to claim 1 or claim 6, **characterised in that** the strip tiller (1) comprises at least two packer-roller modules (6), wherein each of the packer-roller modules (6) comprises its own shaft, on which at least one packer-roller tool (7) is arranged.

10. Strip tiller according to claim 7, **characterised in that** the strip tiller comprises, in addition to the fine-tilling device, at least one packer-roller module (6), wherein the at least one packer-roller module comprises its own shaft, on which at least one packer-roller tool (7) is arranged.

## Revendications

1. Fraiseuse à bandes (1) pour réaliser un lit de semences moyennement fin, comprenant au moins deux fraises (2) espacées l'une de l'autre pour réaliser des sillons de fraisage qui alternent avec des bandes intermédiaires non travaillées, lesdites au moins deux fraises (2) espacées l'une de l'autre étant disposées sur un axe (5) et étant munies d'outils rotatifs (2a, 2b), la fraiseuse à bandes (1) comprenant un certain nombre de dispositifs (3) pour épandre de l'engrais, qui correspond au moins au nombre de fraises (2) pour réaliser les sillons de fraisage, au moins un dispositif (3) pour épandre de l'engrais (31) étant disposé au niveau de chacune desdites au moins deux fraises (2) espacées l'une de l'autre, le dispositif (3) pour épandre de l'engrais (31) étant constitué par au moins un canal (3c) pour le transfert de l'engrais (31), ledit au moins un canal (3c) étant muni à son extrémité supérieure d'au moins une ouverture d'alimentation (3a) pour l'engrais et à son extrémité inférieure d'au moins une ouverture de distribution (3b) pour l'engrais, l'ouverture de distribution (3b) pour l'engrais étant disposée en dessous des outils rotatifs (2a, 2b) desdites au moins deux fraises (2) espacées l'une de l'autre pour réaliser des sillons de fraisage, la fraiseuse à bandes (1) comprenant au moins un autre outil de travail du sol, tel qu'une dent de cultivateur (4), un décompacteur, un dispositif pour broyer et/ou écraser les résidus de récolte de cultures en ligne ou autres, **caractérisée en ce que** l'ouverture de distribution (3b) du dispositif (3) pour épandre de l'engrais est réglable en hauteur par rapport à l'autre outil de travail du sol.

2. Fraiseuse à bandes (1) selon la revendication 1, **caractérisée en ce qu'**un dispositif de protection est disposé, dans le sens de la marche, devant le dispositif (3) pour épandre de l'engrais (31) dans un lit de semence.

3. Fraiseuse à bandes (1) selon la revendication 1, **caractérisée en ce que** le dispositif (3) pour épandre de l'engrais (31) est disposé, dans le sens de la marche, derrière lesdites au moins deux fraises (2) espacées l'une de l'autre de la fraiseuse à bandes (1) ou derrière ledit au moins un autre outil de travail du sol.

4. Fraiseuse à bandes (1) selon la revendication 1, **caractérisée en ce que** l'autre outil de travail du sol est une dent de cultivateur (4) ou un décompacteur, et au moins une partie du canal (3c) du dispositif (3) pour épandre de l'engrais est disposée dans cette dent de cultivateur (4) ou ce décompacteur.

5. Fraiseuse à bandes (1) selon l'une au moins des revendications précédentes, **caractérisée en ce qu'**une dent de cultivateur (4) ou un décompacteur est disposé(e), dans le sens de la marche, devant ou derrière chacune desdites au moins deux fraises (2) espacées l'une de l'autre pour réaliser des sillons de fraisage, un dispositif (3) pour épandre de l'engrais (31) étant disposé entre la dent de cultivateur (4) considérée ou le décompacteur considéré et l'axe (5) de la fraiseuse à bandes (1), ou derrière l'axe (5) de la fraiseuse à bandes (1).

6. Fraiseuse à bandes (1) selon la revendication 1, **caractérisée en ce que** le dispositif (3) pour épandre de l'engrais dans un lit de semence est constitué de deux canaux (3c, 3cc) pour épandre l'engrais et de la semence, le canal supplémentaire (3cc) étant muni à son extrémité supérieure d'au moins une ouverture d'alimentation (3aa) pour la semence et à son extrémité inférieure d'au moins une ouverture de distribution (3bb) pour la semence, ladite au moins une ouverture de distribution (3bb) pour la semence étant disposée sous la surface du lit de semence, et les ouvertures de distribution pour l'engrais (3b) et la semence (3bb) étant disposées de manière décalée horizontalement et verticalement l'une par rapport à l'autre.

7. Fraiseuse à bandes (1) selon la revendication 1 ou la revendication 6, **caractérisée en ce qu'**au moins un dispositif de fraisage fin est disposé devant ou derrière la fraiseuse à bandes (1), ledit au moins un dispositif de fraisage fin étant muni d'au moins un outil de fraisage ayant une profondeur de fraisage inférieure à celle de la fraise (2), et en tout au moins deux outils de fraisage étant présents.

8. Fraiseuse à bandes (1) selon la revendication 1 ou la revendication 6, **caractérisée en ce que** les fraises (2) sont munies d'un dispositif pour broyer et/ou écraser les résidus de récolte de cultures en lignes, en particulier les chaumes coincés dans le sol et pourvus de racines ou de chaumes reposant sur le sol, le dispositif étant muni d'au moins un corps fixe et au moins un corps rotatif entraîné parallèlement audit au moins un corps fixe, et un passage pour les résidus de récolte étant disposé entre ledit au moins un corps fixe et ledit au moins un corps rotatif entraîné, la section dudit passage étant plus étroite, au moins par endroits, que la section des résidus de récolte traversant le passage, et le corps fixe étant une poutre ou un disque, et **en ce qu'**au moins des moyens supplémentaires de broyage et/ou d'écrasement des résidus de récolte sont disposés sur la poutre ou le disque.

9. Fraiseuse à bandes (1) selon la revendication 1 ou la revendication 6, **caractérisée en ce que** la fraiseuse à bandes (1) comprend au moins deux modules de rouleau packer (6), chacun des modules de rouleau packer (6) ayant son propre axe sur lequel est disposé au moins un outil de rouleau packer (7).

10. Fraiseuse à bandes selon la revendication 7, **caractérisée en ce que** la fraiseuse à bandes comprend, outre le dispositif de fraisage fin, au moins un module de rouleau packer (6), ledit au moins un module de rouleau packer étant muni de son propre axe sur lequel est disposé au moins un outil de rouleau packer (7).
